## Europäisches Patentamt
## European Patent Office
## Office européen des brevets

(11) Publication number: **0 074 696**
**B1**

# EUROPEAN PATENT SPECIFICATION

(45) Date of publication of patent specification: **20.03.85**

(51) Int. Cl.⁴: **H 04 N 5/68**

(21) Application number: **82201125.0**

(22) Date of filing: **10.09.82**

(54) **Information display system.**

(30) Priority: **10.09.81 NL 8104185**

(43) Date of publication of application:
**23.03.83 Bulletin 83/12**

(45) Publication of the grant of the patent:
**20.03.85 Bulletin 85/12**

(84) Designated Contracting States:
**AT BE CH DE FR GB IT LI LU NL SE**

(56) References cited:
**DE-A-2 558 704**
**GB-A-2 008 351**
**US-A-3 941 926**
**US-A-4 009 335**

(73) Proprietor: **Kreon Screen International B.V.**
**Graaf Lodewijkstraat 14**
**NL-2415 AR Nieuwerbrug aan de Rijn (NL)**

(72) Inventor: **Binder, Martin Johannes**
**Heult 4**
**NL-5283 SC Boxtel (NL)**

(74) Representative: **Noz, Franciscus Xaverius, Ir.**
**et al**
**Algemeen Octrooibureau P.O. Box 645**
**NL-5600 AP Eindhoven (NL)**

Courier Press, Leamington Spa, England.

## Description

The present invention concerns an information display system, comprising a computer device having at least one input member for receiving video information and a processor member connected to said input member for processing and/or controlling digital video information contained in and/or obtained from the video information received from the input member and/or digital video information generated by the computer device itself in order to produce display signals and at least one display panel having a display surface.

A system of the above mentioned nature is disclosed in U.S. patent specification 4,009,335.

In particular said known system is a gray scale display system as improvement over a mere black and white display system, said display system comprising a display panel consisting of light emitting devices, specifically incandescent lamps arranged in a matrix. The aforementioned gray scale display is obtained by selective excitation of said incandescent lamps and control of the respective levels of excitation. In order to obtain excitation signals the input video signal is quantized and digitized to obtain digital values next to synchronisation signals. Each light emitting device or display element is energized by an amount proportional to the light intensity of a quantized segment of the actual scene, whereby to each lamp an individual numerical address is assigned. In the disclosed system eight levels inclusive black and white are possible. Further the memory of the data processor essentially is an image of the matrix of incandescent lamps.

The main drawback of the known system is its poor resolution due to the fact that the pixels are determined by the dimensions of the incandescent lamps, which also determine the maximum brightness to be obtained. Further the response rate of said incandescent lamps is limited. Further with said known device no colour display is possible.

The present invention aims to obviate at, least the above mentioned drawbacks and provides for a system of the above mentioned nature, characterized in, that the system further comprises a communication channel having a data bus and a control bus, connected to the processor member of the computer device for the transmission of the display data and the control signals, respectively, said display data and control signals together forming said display signals, a memory device connected to the data bus for storing the display data received from the data bus, a memory control device connected to the control bus for controlling the storage of display data in and reading the stored display data from the memory device in response to control signals received from the control bus, and a digital to analogue converting device connected to the memory device for producing analogue display signals during reading of the memory device, wherein said at least one display panel consists of a plurality of electronic display units each capable of displaying an image by itself, arranged side by side in a manner such that the respective display surfaces together constitute the display surface of the display panel.

The electronic display units making up the display panel each comprise a display device capable of displaying preferably a colour image or colour alpha numeric information by itself, for instance a cathode ray tube or a flat panel display device.

The main advantage of the display system of the present invention is its enormous resolution and brightness.

Further the present system is extremely suitable for colour display.

Noticed is that from German patent application 2,558,704 is known per se a display panel comprising cathode ray tubes arranged side by side. However, in said known display panel to each cathode ray tube belongs a display screen and an optical magnifying system, whereby said optical magnifying system is placed between a respective display screen and the display surface of a respective cathode ray tube. Therefore the resolution of said display panel as well as the maximum brightness thereof will be lowered considerably.

Eventually is noticed that from the U.K. patent application 2,008,351 a flat display device using a number of electron beams which scans different sections of the image display screen of said flat display device, is known. However, said flat display panel device is not a display panel as described above, and to the contrary is an example of a display device, which might be used in an electronic display unit as defined above.

The display surface of the display panel may vary between, for example, 2 ms² and 200 ms² or more, whilst the depth of the display panel remains the same, for example, 50 cms, independently of the size. Preferably the display panel is formed by arranging a plurality of display tubes side by side in a frame.

The system embodying the present invention might be designated a super-macro-image television.

By means of the system embodying the present invention television programmes, video programmes and/or information programmes can be displayed on a large screen. Video programmes may be received from a video recorder or a video camera.

Thanks to the computer device texts, logos and animation images can be written on the display surface of the display panel. The information may be included both separately and simultaneously in the current television or video programme. Moreover, the information can be directly written by a keyboard on the display surface or directly by means of pre-programmed video cassettes.

The above summary is not limitative.

Briefly stated, an image can be displayed on a large scale, whilst a plurality of images can be combined into one large image to be displayed. The display panel has a very high resolution and a high luminance exceeding many times that of a normal television image. This means that the display panel can be used also in daylight.

In order to protect the display surface of the display panel it may be provided at the front with a transparent perspex sheet. The system embodying the invention is particularly suitable for advertising, video performances, information transmission, film display or combinations of these possibilities.

Finally it is an advantage of the system embodying the present invention that displays can be real time and various effects can be obtained such as repetitions, slow-down representations, close-ups and so on.

The invention will now be described in detail with reference to the drawing, in which

Figure 1 shows a highly simplified block diagram of the system embodying the invention,

Figure 2 is a front view of the panel of the system embodying the present invention,

Figure 3 shows a block diagram in further detail of the system embodying the present invention, which is in particular compatible with the known television system and the display panel is composed of display tubes,

Figure 4 shows a detail of a display tube of the panel embodying the invention and

Figure 5A, B, C illustrate the use of prisms in the display panel in accordance with the invention.

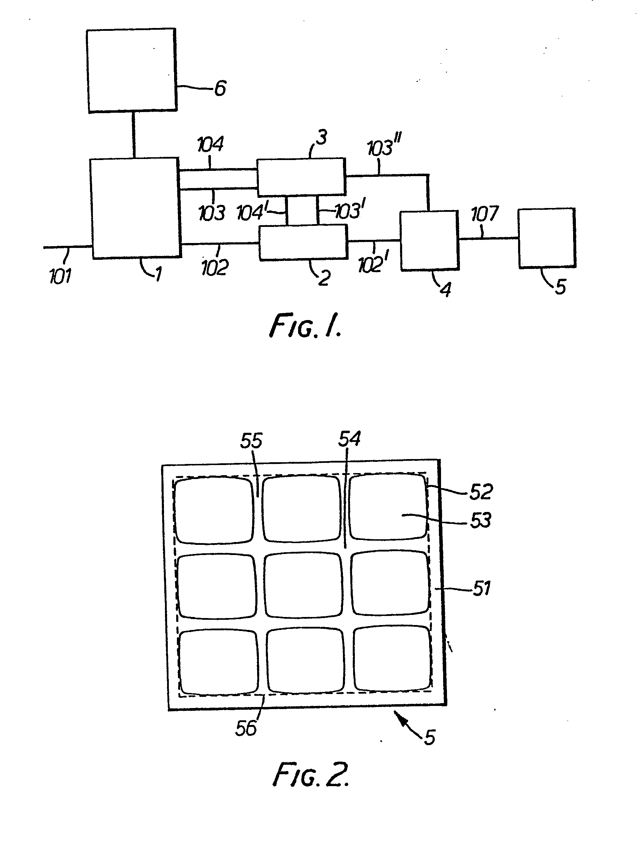

Figure 1 shows a highly simplified block diagram of the information display system in accordance with the invention. Reference numeral 1 designates a computer device having a video input 101 and being connected to a data bus 102, a control-bus 103 and an address-bus 104. The computer device may furthermore be connected to peripheral apparatus 6, for example, a terminal station and a memory for video information to be displayed produced by the computer device. The digital video information produced by the computer device may or may not be displayed together with the received video information processed or not processed and being of digital, analogous nature or a combination thereof on a display panel. For this purpose the system embodying the invention comprises at least one display panel 5, a memory device 2, a memory control-device 3 and a digital/analogue conversion device 4. The digital display data of the computer device are transmitted through the data bus to the memory device, whereas the address and control-signals of the computer are transmitted by means of the address bus and the control-bus respectively to the memory control-device 3. The memory control-device generates control-signals on a line 103' to control the memory device 2 and control-signals on a line 103'' to control the digital/analogue converter, which receives display data signals through a line 102'. Finally the digital/analogue converter 4 passes analogue display signals through a line 107 to the display panel 5.

As stated above, the video information received by the computer device may be of a digital or analogue nature or a combination thereof. In this regard the video input of the computer may be connected to a member capable of detecting the nature of the incoming video information and/or to an analogue/digital converter for converting incoming analogue video information into digital video information. Moreover, the computer may have separate inputs for analogue and for digital video information.

The memory control-device 3, the memory device 2 and the digital/analogue conversion device 4 may each be formed by a plurality of the respective members co-operating with different display panels 5.

According to the invention each display panel 5 consists of a plurality of electronic display units 52 (Figure 2) each having a display surface 53. The electronic display units are arranged side by side in the frame 51 of the display panel in a manner such that the respective display surfaces 53 together constitute the display surface of the display panel, the latter surface being marked by a dot-and-dash outline designated by reference numeral 56.

The display surface of the display panel may be flat or curved, for example, corresponding with the curvatures of the display tubes employed.

Since the display panel 1 is composed of identical units, replacement can be carried out in a simple manner.

With respect to each display panel 5 the memory device 2, the memory control-device 3 and the digital/analogue converter 4 comprise at least one individual member for each electronic display unit of the display panel. When the incoming video information is at least compatible with the interlaced colour television system, each memory device and memory control-device may comprise for each electronic display member two respective members and the digital/analogue converter may comprise for each colour two respective members, i.e. in the case of colour signals, six digital/analogue converting members. The system embodying the invention may, of course also be designed for the sole reproduction of black-white video information, whilst the system may furthermore be designed for multiple interlacing.

One of the most important faculties of the system embodying the invention is that the computer device 1 processes video information received at the input 101 in a manner such that this information, which is displayable with the aid of a single electronic display unit 52 can now be displayed on a display panel 5 of considerably larger dimensions by partial images contained in said video information to be displayed on one individual electronic display unit of the display panel in a manner such that by allotting partial images to defined electronic display units the same image is formed, but of much larger dimensions and improved resolution. The display panel may even be composed of 400 display screens or television display tubes, each of which is capable of displaying a partial image 1/400th the original image, electronically magnified to the dimensions of the original image size. The system embodying the present invention might, therefore, be termed an image magnifying system. Owing to the digital processing the resolution is, however, not adversely affected in contrast to the effect of optical means.

A further possibility of the system embodying the invention resides in using a number of electronic display units of continuous display surfaces for reproducing an original image on an enlarged scale and using remaining electronic display members for reproducing additional video information generated by the computer itself and/or introduced with the aid of a terminal station and a memory.

It will be obvious that the system embodying the invention encompasses numerous possibilities of use in many domains.

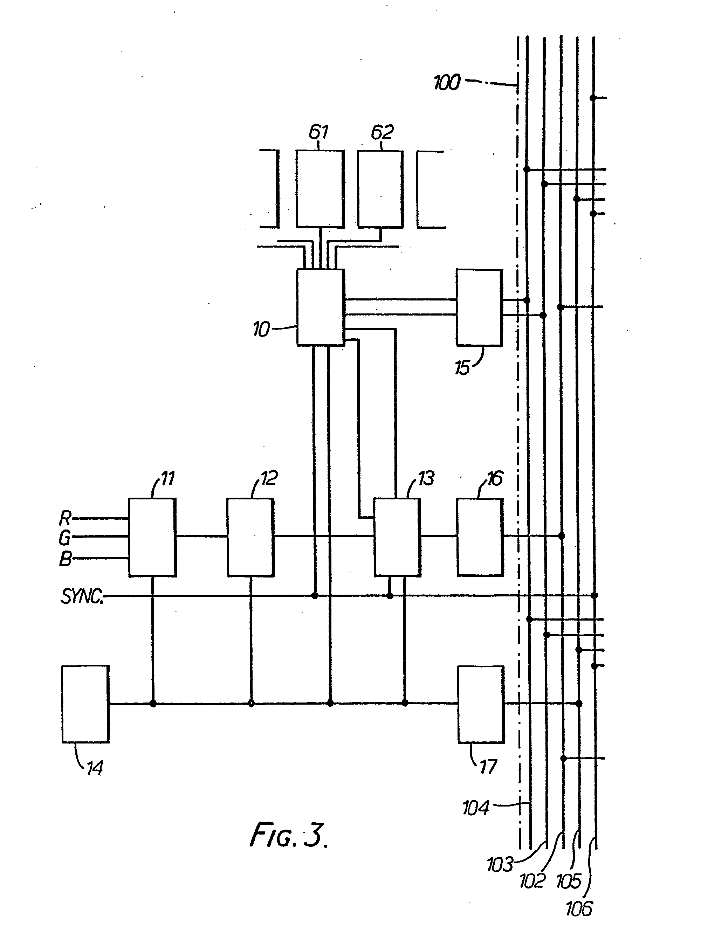

Figure 3 shows the block diagram of Figure 1 more in detail for the case in which the received video information consists of analogue colour signals and a synchronizing signal and in which furthermore the interlacing system is employed.

Referring to Figure 3 the computer device comprises a processor member 10, a multiplexer 11, an analogue/digital converting member 12, a data interface member 13, a clock generator 14, control-members 15 and 16 and an amplifier 17. The computer device is furthermore connected to peripheral apparatus such as a terminal station 61 and a memory 62.

Of the memory and the memory control-device is shown only that part which cooperates with one electronic display unit, in particular, comprising a colour display tube 57 and a television board 50. In view of the interlacing system the memory, the memory control and the digital/analogue converter are doubled for each electronic display unit. For the sake of ease only one part indicated by a dot-and-dash outline designated by reference symbol I will be described hereinafter.

Referring to Figure 3 there are provided a memory member, a memory control-member and three digital/analogue converting members for each frame of a half image to be displayed on the display tube of each electronic display unit. The memory member, the memory control-member and the digital/analogue converting member may, however, be designed so that in common for the frames of an image to be displayed on the display tube of each electronic display unit there are provided only one memory member, one memory control-member and three analogue/digital converting members, the memory member having double the capacity of the memory members of Figure 3 in case of duplicate interlacing. The respective memory control-members control the memory members in a manner such that when one half of a memory member is read and displayed synchronously herewith on the respective display tube, the other half of the memory is written or supplemented. In case of the double structure of Figure 3 the electronic implementation is simpler than in the other case mentioned above as a result of the less complex control-requirements.

In case of said double structure it is preferred for each electronic display unit to comprise a display tube or a different screen member and three insertable printed circuits, one print having the required electronic means for generating at least one electron beam in the case of a display tube, for deflecting the electron beam(s) and for controlling the instantaneous intensity thereof and a second print and, preferably, a third print identical to the second print having each a memory member, a memory control-member and a number of digital/analogue converting members equal to the number of electronic beams. The display panel is composed in this case of identical units.

The interlacing part I is connected by means of a communication channel 10 to the computer device. The communication channel 100 comprises the above-mentioned data bus 102, the control-bus 103 and the address-bus 104 and part therefrom a clock-bus 105 and a synchronisation-bus 106.

The communication channel may comprise cables, infrared or fibre-optical ways.

The clock generator 14 produces a clock signal and applies the same to the multiplexer 11, the analogue/digital converting member 12, the processor member 10, the data coupling member 13 and by means of the amplifier 17 to the clock-bus.

The clock generator 14 produces sampling pulses of a frequency as high as is required for display with a large bandwidth input.

The incoming video information includes the colour video signals red, green and blue, which are applied to the multiplexer 11 and a synchronizing signal applied to the processor member 10, the data interface member 13 and the synchronizing bus 106. The colour video signals multiplexed by the multiplexer 11 are digitalized in the analogue/digital converter 12 and then applied to the data interface member and subsequently to the processor member in order to process the data concerned in accordance with a programme or instructions furnished by the terminal station 61 and/or the memory 62. This processing can be concerned with a processing of the incoming video information, but also with the combination thereof with internally generated video information. By means of control-members 16 the data interface member 13 provides display data to the data bus 102. It is not necessary to provide invariably one driving member for each electronic display unit. In a specific case, for example, one driving member may be used for three electronic display units. The same applies to the driving members 15, which pass the address and control signals of the processor member to the control-bus. Finally the processor member applies furthermore a control-signal to the data coupling member.

Each memory control-member 31 is connected to the address bus 104, the control-bus 103, the clock-bus 105 and the synchronisation bus 106. Each memory member 21 is connected to the data bus and receives through the line 104' address signals and through the line 103' control-signals from the memory control-member 31 concerned. The digital/analogue converting members 41, 42 and 43 for red, green and blue respectively receive through the line 103" a fly-back suppression signal from the memory control-member 31 and through the lines 102R, 102G and 102'B respectively the respective display data and in turn they apply through the lines 107R, 107G and 107B analogue display signals to the television board 50, which board is also connected to the synchronization bus, which means that all display screens 57 are synchronously scanned or written.

A memory control-member 31 is selected by an address and each memory member 21 receives instructions by means of the data and control-bus. The further data address signals are video information. The data are stored in the memory in accordance with the address.

Reading of the memory members is synchronized by the synchronizing signal contained in the incoming video information.

The control is furthermore such that reading synchronous with the scan of the first interlacing part I supplements the second interlacing part II.

Visual improvement is obtained by writing the second interlacing on the edges of the image dots of the first interlacing.

The system embodying the invention comprises at least one display device having a large screen controlled by a computer device. The object of the system according to the present invention is to display video information and information processed and controlled by a computer device on large surfaces. In synchronism with the image display sound may, of course, be reproduced.

Recurring to the display panel 5 as shown by way of example in Figure 2 it is assumed that the electronic display members comprise cathode-ray tubes or display tubes 42. The following part of this description is in particular concerned with the perfection of the visual impression, that is to say, the impression that the display panel 5 functions as a single screen, whilst the display surface is formed by the respective discrete surfaces 53 of the display tubes 52. This involves that a solution has to be found for the discontinuities 54 and 55 resulting from the side-by-side arrangement of the display tubes 52. These discontinuities can be minimized by disposing the display tubes 52 as near one another as possible. For that matter, the discontinuities in smaller panels will be more disturbing than in large panels, since the viewing distance from the panel is larger in the latter case. A further problem of the display panel in the system embodying the invention may reside in that, as is known, the front faces of the display tubes are curved. This problem is particularly involved when the display tubes are mounted, so to say, in a flat plane.

A solution for the two above-mentioned problems is found in the use of flat, transparent Fresnel lenses preferably having having more than 60 grooves/cm.

In front of the front side of each display tube 52 is disposed a Fresnel lens in a manner such that the image displayed by the respective display tube is magnified to an extent such that the respective images of partial images join one another and are transformed in a flat plane determined by the Fresnel lenses. In practice it has been found that this solution is particularly suitable for small display panels.

A solution for the problem of obtaining coplanar images displayed by the various display tubes 52 is particularly related to the display tubes themselves.

Figure 4 shows a detail of a display tube to be used in the panel in accordance with the invention. With the exception of the front side of the display tube it is a conventional one. The centre line of the display tube is designated by M and the screen is designated by reference numeral 61. The screen 61 is a curved surface having phosphor trios in the case of colour display tubes. The front side of the display tube designated by reference numeral 62 is flat and adjoins the curved outer face of the screen 61. In the front plate are included optical fibres i.e. at least one fibre per colour phosphor trio in a manner such that at the centre the fibre or fibres is (are) at right angles to both the screen 61 and the front face 62, whereas towards the outside the fibres spread in fan-like fashion as is clearly shown in Figure 4. The fibres themselves are designated by reference numeral 64. Briefly stated, the fibres 64 transform the curved surface of the screen 61 into a flat surface 62. Owing to the flat structure of the front plates of the display tubes they can be arranged more closely to one another, whilst the remaining interstice, at least at the level of the front plate, can be filled out with an elastic filler, for example, silicone cement. The advantage of using at least partly transparent silicone cement is that the silicone cement will absorb to some extent the radiation of the front plates between which it is sandwiched so that the aforesaid discontinuities are at least less conspicuous and under favourable conditions they will not attract the attention. .

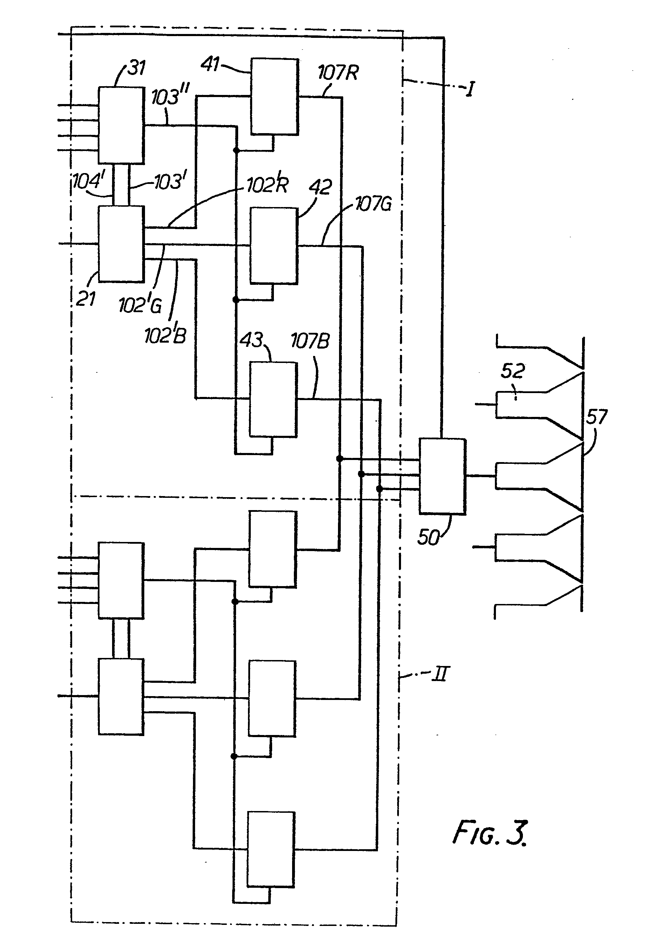

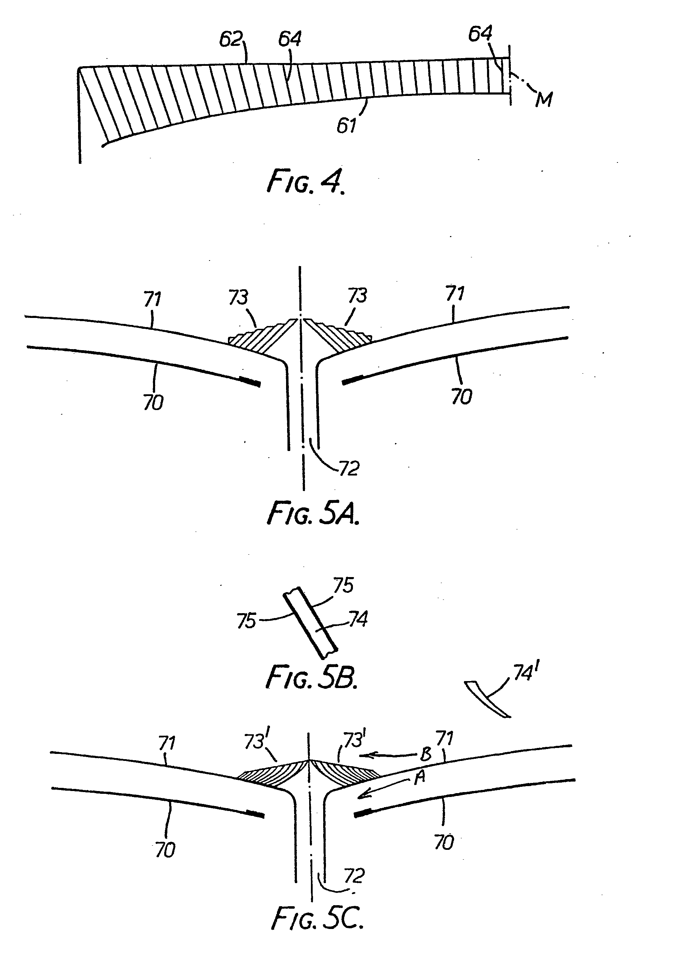

A further solution of the problem involved in the discontinuities is found in the use of prisms specifically designed for this purpose as shown in Figures 5A, B, C.

Referring to Figures 5A, C reference numeral 70 designates the screen of a conventional display tube having a curved front plate 71. In the side-by-side arrangement of the display tubes 70 gaps 72 are formed, which give rise to the aforesaid discontinuities. At the periphery of the front plate 71 of the display tube 70 are placed prisms 73, 73' so that the prisms arranged on neighbouring display tubes co-operate with one another as is indicated in Figures 5A, C.

Figure 5B shows an optically transparent bar 74 or light guide, which has reflective layers on the long sides, for example a metal foil 75. The bars are disposed in re-entrant positions one on the other. The effect of the prisms is based on the principle of light conduction by reflection at the walls. The bars 74 are thus arranged at an angle to the front plate 71 of the display tube 70. In other words, the effect of the prisms is based on total reflection in a parallel transparent body. In fact filling out the discontinuities in the display is not based on information transmission but on the transmission of colour and luminance or else the colour and light/dark effect on the screen. The continuity is thus essentially obtained as a confused image. Further, the cross-sectional areas of the bars 74 may be related to the size of the image dot.

Figure 5C illustrates the use of conical light conductors 74' in the prisms 73'. The light conductors are arranged in contact with one another and adjoin the front plate of the display tube and are in line with one another on the other side of the prism in a manner such that they are directed in positions (arrow B) opposite to the curvature (arrow A) of the front plate of the display tube.

## Claims

1. An information display system, comprising a computer device having at least one input member for receiving video information and a processor member connected to said input member for processing and/or controlling digital video information contained in and/or obtained from the video information received from the input member and/or digital video information generated by the computer device itself in order to produce display signals, and at least one display panel having a display surface, characterized, in that the system further comprises a communication channel having a data bus and a control bus, connected to the processor member of the computer device for the transmission of the display data and the control signals, respectively, said display data and control signals together forming said display signals, a memory device connected to the data bus for storing the display data received from the data bus, a memory control device connected to the control bus for controlling the storage of display data in and reading the stored display data from the memory device in response to control signals received from the control bus, and a digital to analogue converting device connected to the memory device for producing analogue display signals during reading of the memory device, wherein said at least one display panel consists of a plurality of electronic display units each capable of displaying an image by itself, arranged side by side in a manner such that the respective display surfaces together constitute the display surface of the display panel.

2. An information display system as claimed in Claim 1 characterized in that for each electronic display unit the memory and the memory control-device comprises at least one memory member and memory control-member respectively, in that the communication channel furthermore comprises an address bus connected to the processor member, whilst each memory member is connected to the data bus and each memory control-member is connected to the control bus and the address bus and in that the processor member comprises means for processing video information and generating address signals in a manner such that in at least two memory members connected to individual electronic display units such a processed part of at least the video information received from the input member is stored that the electronic display units concerned co-operate at least for displaying an original image contained in the video information received at the input member.

3. An information display system as claimed in Claim 1 or Claim 2 in which the incoming video information contains or consists of analogue black/white or colour video signals and synchronizing signals characterized in that the input member comprises a multiplexer sub-member for multiplexing the black/white video signal or the red, green and blue video signals and for applying the multiplexed signal to the analogue/digital converting member, in that the communication channel comprises a synchronisation bus for the transmission of synchronizing signals, whilst the input member passes the synchronizing signal to the processor member and the synchronisation bus and the memory control-members and the electronic display units are connected to the synchronisation bus and in that the digital/analogue converting device connected to each memory member comprises a digital/analogue converter for black/white or a digital/analogue converter for red, green and blue.

4. An information display system as claimed in Claim 3 in which the incoming video information contains interlaced television video signals characterized in that each electronic display unit comprises a display tube, a display member for producing at least one electron beam, for deflecting the electron beam(s) and for controlling the instantaneous intensity thereof and for each raster of a half image a memory member, a memory control-member and one or three digital/analogue converting members and in that each memory control-member produces a fly-back suppressing signal for one or, respectively, three digital/analogue converting members.

5. An information display system as claimed in anyone of the preceding Claims in which each electronic display unit comprises a display tube characterized in that in front of the front plate of each display tube of the display panel a flat Fresnel lens is arranged so that the images of neighbouring display tubes are magnified so that the image displayed by the panel is free of discontinuities.

6. An information display system as claimed in Claim 5 characterized in that the Fresnel lenses have a minimum of 60 grooves/cm.

7. An information display system as claimed in Claim 5 or Claim 6 characterized in that the Fresnel lenses are arranged in front of the front plates of the respective display tubes at least so as to engage one another.

8. An information display system as claimed in anyone of Claims 1 to 4 in which each display unit comprises a display tube characterized in that on one side the front plate is shaped in conformity with the screen of the display tube and is flat on the other side and in that optical fibres are provided in the front plate so as to extend from the side of the front plate adjoining the screen to the flat side of the front plate in a manner such that they spread in fan-like fashion from the centre of the screen towards the periphery of the screen to the flat side of the front plate.

9. An information display system as claimed in anyone of Claims 1 to 4 in which each display unit of the panel comprises a display tube characterized in that at the circumference of the front plate of each display tube prisms are arranged in a manner such that they optically fill out the imageless gaps between the respective front plates of the display tubes of the display panel.

10. An information display system as claimed in Claim 9 characterized in that the prisms of neighbouring display tubes at least substantially adjoin one another.

11. An information display system as claimed in Claim 9 or Claim 10 characterized in that each prism is formed by a plurality of transparent bars separated from one another by a layer of reflective material, the array of the various bars being such that they are relatively off-set on the side of the prism opposite the side adjoining the display tube.

12. An information display system as claimed in Claim 9 or Claim 10 characterized in that each prism is formed by a plurality of relatively adjoining conical light conductors.

13. An information display system as claimed in Claim 12 characterized in that the light conductors are arranged so that the prism adjoins on one side the front plate of the display tube and are in line on the other side, said line being directed opposite the curvature of the front plate of the display tube.

14. A display panel adapted for use in a system as claimed in anyone of the Claims 5 to 13.

**Patentansprüche**

1. Informationswiedergabesystem mit einem Computer, mit wenigstens einem Eingangsteil für den Empfang von Videoinformationen und einem an den Eingangsteil angeschlossenen Prozessorteil zum Verarbeiten und/oder Steuern digitaler Videoinformationen, die in den vom Eingangsteil empfangenen Videoinformationen enthalten sind und/oder aus diesen Videoinformationen erhalten werden und/oder digitaler Videoinformationen, die vom Computer selbst generiert werden, damit Wiedergabesignale erzeugt werden, und wenigstens einer Wiedergabetafel mit einer Wiedergabe fläche, gekennzeichnet durch einen Übertragungskanal mit einem Datenbus und einem Steuerbus, der an den Prozessorteil des Computers zum Übertragen der Wiedergabedaten bzw. der Steuersignale angeschlossen ist, wobei die Wiedergabedaten und die Steuersignale zusammen die Wiedergabesignale bilden, eine an den Datenbus angeschlossene Speichervorrichtung zum Speichern der vom Datenbus empfangenen Wiedergabedaten, eine an den Steuerbus angeschlossene Speichersteuervorrichtung zum Steuern des Speicherns von Wiedergabedaten in der Speichervorrichtung und zum Lesen der gespeicherten Wiedergabedaten aus der Speichervorrichtung in Abhängigkeit von vom Steuerbus empfangenen Steuersignalen und eine Digital-Analog-Umsetzungsvorrichtung, die an die Speichervorrichtung angeschlossen ist und analoge Wiedergabesignale während des Lesens der Speichervorrichtung erzeugt, wobei die wenigstens eine Wiedergabetafel aus mehreren elektronischen Wiedergabeeinheiten besteht, die jeweils allein ein Bild darstellen können und Seite an Seite so angeordnet sind, daß die jeweiligen Wiedergabeflächen zusammen die Wiedergabefläche der Wiedergabetafel bilden.

2. Informationswiedergabesystem nach Anspruch 1, dadurch gekennzeichnet, daß die Speichervorrichtung und die Speichersteuervorrichtung für jede elektronische Wiedergabeeinheit wenigstens ein Speicherglied bzw. ein Speichersteuerglied enthalten, daß der Übertragungskanal ferner einen Adressenbus enthält, der an den Prozessorteil angeschlossen ist, während jedes Speicherglied an den Daten bus und jedes Speichersteuerglied an den Steuerbus und an den Adressenbus angeschlossen ist und daß der Prozessorteil Mittel enthält, die Videoinformationen so verarbeiten und Adressensignale so erzeugen, daß in wenigstens zwei an einzelne elektronische Wiedergabeeinheiten angeschlossene Speicherglieder ein solcher verarbeiteter Teil wenigstens der vom Eingangsteil empfangenen Videoinformation abgespeichert wird, daß die betroffenen elektronischen Wiedergabeeinheiten wenigstens zur Wiedergabe eines Originalbildes zusammenarbeiten, das in der am Eingangsteil empfangenen Videoinformation enthalten ist.

3. Informationswiedergabesystem nach Anspruch 1 oder 2, bei welchem die ankommenden Videoinformationen analoge Schwarz/Weiß- oder Farb-Videosignale und Synchronisierungssignale enthalten oder aus solchen Signalen bestehen, dadurch gekennzeichnet, daß der Eingabeteil eine Multiplexer-Teilbaueinheit zum Multiplexieren der Schwarz/Weiß-Videosignale oder der Rot-, Grün- und Blau-Videosignale zum Anlegen der multiplexierten Signale an die Analog-Digital-Umsetzungsvorrichtung enthält, daß der Übertragungskanal einen Synchroniserungsbus zum Übertragen von Synchronisierungssignalen enthält, während der Eingangsteil die Synchronisierungssignale dem Prozessorteil und dem Synchronisierungsbus zuführt und die Speichersteuerglieder sowie die elektronischen Wiedergabeeinheiten an den Synchronisierungsbus angeschlossen sind, und daß die Digital-Analog-Umsetzungsvorrichtung, die mit jedem Speicherglied verbunden ist, einen Digital-Analog-Umsetzer für Schwarz/Weiß oder einen Digital-Analog-Umsetzer für Rot, Grün und Blau enthält.

4. Informationswiedergabesystem nach Anspruch 3, wobei die ankommen Videoinformationen ineinander verschachtelte Fernseh-Videosignale enthalten, dadurch gekennzeichnet, daß jede elektronische Wiedergabeeinheit folgendes enthält: eine Wiedergaberöhre, ein Wiedergabeglied zur Erzeugung wenigstens eines Elektronenstrahls und zu dessen Ablenkung sowie zur Steuerung seiner momentanen Intensität, und für jedes Raster eines Halbbildes ein Speicherglied, ein Speichersteuerglied sowie ein oder drei Digital-Analog-Umsetzungsglieder, und daß jedes Speichersteuerglied ein Rücklaufunterdrückungssignal für ein bzw. drei Digital-Analog-Umsetzungsglieder erzeugt.

5. Informationswiedergabesystem nach einem der vorhergehenden Ansprüche, wobei jede elektronische Wiedergabeeinheit eine Wiedergaberöhre enthält, dadurch gekennzeichnet, daß auf der Vorderseite der Frontplatte jeder Wiedergaberöhre der Wiedergabetafel eine Flache Fresnel-Linse so angebracht ist, daß die Bilder benachbarter Wiedergaberöhren so vergrößert werden, daß das von der Tafel wiedergegebene Bild frei von Diskontinuitäten ist.

6. Informationswiedergabesystem nach Anspruch 5, dadurch gekennzeichnet, daß die Fresnel-Linsen mindestens 60 Rillen/cm haben.

7. Informationswiedergabesystem nach Anspruch 5 oder 6, dadurch gekennzeichnet, daß die Fresnel-Linsen vor den Frontplatten der jeweiligen Wiedergaberöhren wenigstens ineinander eingreifend angebracht sind.

8. Informationswiedergabesystem nach einem der Ansprüche 1 bis 4, wobei jede Wiedergabeeinheit eine Wiedergaberöhre enthält, dadurch gekennzeichnet, daß eine Seite der Frontplatte in Anpassung an den Bildschirm der Wiedergaberöhre geformt ist und auf der anderen Seite flache ist und daß in der Frontplatte Lichtleitfasern so angebracht sind, daß sie sich von der an den Bildschirm angrenzenden Seite der Frontplatte zur flachen Seite der Frontplatte so erstrecken, daß sie sich von der Bildschirmmitte aus fächerartig gegen den Umfang des Bildschirms zur flachen Seite der Frontplatte hin erstrecken.

9. Informationswiedergabesystem nach einem der Ansprüche 1 bis 4, wobei jede Wiedergabeeinheit der Tafel eine Wiedergaberöhre enthält, dadurch gekennzeichnet, daß am Umfang der Frontplatte jeder Wiedergaberöhre Prismen so angeordnet sind, daß sie die bildfreien Lücken zwischen den jeweiligen Frontplatten der Wiedergaberöhren der Wiedergabetafel optisch ausfüllen.

10. Informationswiedergabesystem nach Anspruch 9, dadurch gekennzeichnet, daß die Prismen benachbarter Wiedergaberöhren sich zumindest im wesentlichen aneinander anschließen.

11. Informationswiedergabesystem nach Anspruch 9 oder 10, dadurch gekennzeichnet, daß jedes Prisma aus mehreren lichtdurchlässigen Stäben gebildet ist, die mittels einer Schicht aus reflektierendem Material voneinander getrennt sind, wobei die Gruppe der verschiedenen Stäbe so ausgebildet ist, daß sie auf der Seite des Prismas, die der an die Wiedergaberöhre angrenzenden Seite gegenüberliegt, relativ zueinander versetzt sind.

12. Informationswiedergabesystem nach Anspruch 9 oder 10, dadurch gekennzeichnet, daß jedes Prisma aus mehreren relativ aneinander angrenzenden konischen Lichtleitern gebildet ist.

13. Informationswiedergabesystem nach Anspruch 12, dadurch gekennzeichnet, daß die Lichtleiter so angeordnet sind, daß das Prisma an einer Seite an die Frontplatte der Wiedergaberöhre angrenzt, während sie auf der anderen Seite in einer Linie liegen, wobei diese Linie der Krümmung der Frontplatte der Wiedergaberöhre entgegengesetzt liegt.

14. Wiedergabetafel, geeignet für die Verwendung in einem System nach einem der Ansprüche 5 bis 13.

**Revendications**

1. Système d'affichage d'information, comprenant un dispositif de calcul qui comporte au moins un élément d'entrée, pour recevoir une information d'image, et un élément de traitement relié à l'élément d'entrée, pour traiter et/ou commander l'information numérique d'image contenue dans l'information d'image reçue de l'élément d'entrée et/ou obtenue à partir de celle-ci, et/ou une information numérique d'image engendrée par le dispositif de calcul lui-même, afin de produire des signaux d'affichage, et au moins un panneau de visualisation présentant une surface de visualisation, caractérisé en ce que le système comprend en outre un canal de communication, comportant une ligne commune de données et une ligne commune de commande, raccordé à l'élément de traitement du dispositif de calcul pour la transmission des données d'affichage et des signaux de commande, respectivement, ces données d'affichage et ces signaux de commande constituant ensemble les signaux d'affichage, un dispositif à mémoire raccordé à la ligne commune de données pour stocker les données d'affichage transmises par la ligne commune de données, un dispositif de commande de mémoire raccordé à la ligne commune de commande de façon à commander le stockage des données d'affichage dans le dispositif à mémoire et le lecture des données d'affichage qui y sont stockées, en réponse aux signaux de commande transmis par la ligne commune de commande, et un dispositif convertisseur numérique-à-analogique raccordé au dispositif à mémoire de manière à fournir des signaux analogiques d'affichage pendant la lecture du dispositif à mémoire, ledit au moins un panneau de visualisation étant composé d'une pluralité d'unités électroniques d'affichage, capables chacune d'afficher une image par elle-même, disposées côté-à-côte de manière à ce que les surfaces de visualisation respectives constituent ensemble la surface de visualisation du panneau de visualisation.

2. Système d'affichage d'information suivant la revendication 1, caractérisé en ce que, pour chaque unité électronique d'affichage, la mémoire et le dispositif de commande de mémoire comprennent au moins un élément de mémoire et un élément de commande de mémoire respectivement, en ce que le canal de communication comprend en outre une ligne commune d'adresse raccordée à l'élément de traitement, tandis que chaque élément de mémoire est raccordé à la ligne commune de données et chaque élément de commande de mémoire est raccordé à la ligne commune de commande et à la ligne commune d'adresse, et en ce que l'élément de traitement comprend des moyens pour traiter l'information d'image et engendrer des signaux d'adresse de telle sorte que dans au moins deux éléments de mémoire reliés aux unités électroniques individuelles d'affichage, une telle partie traitée d'au moins l'information d'image transmise par l'élément d'entrée est stockée, de façon à ce que les unités électroniques d'affichage concernées coopèrent au moins pour afficher une image originale contenue dans l'information d'image reçue à l'élément d'entrée.

3. Système d'affichage d'image suivant la revendication 1 ou la revendication 2, dans lequel l'information d'image entrante contient ou est composée de signaux analogiques d'image en noir et blanc ou en couleur et de signaux de synchronisation, caractérisé en ce que l'élément d'entrée comprend un élément multiplexeur secondaire pour multiplier les signaux d'image noir/blanc ou les signaux d'image rouge, vert et bleu et pour appliquer le signal multiplexé à l'élément convertisseur analogique/numérique, en ce que le canal de communication comprend une ligne commune de synchronisation pour la transmission des signaux de synchronisation, lorsque l'élément d'entrée envoie le signal de synchronisation à l'élément de traitement et à la ligne commune de synchronisation, les éléments de commande de mémoire et les unités électroniques d'affichage étant reliés à la ligne commune de synchronisation, et en ce que le dispositif convertisseur numérique/analogique, raccordé à chaque élément de mémoire, comprend un convertisseur numérique/analogique pour noir/blanc ou un convertisseur numérique/analogique pour rouge, vert et bleu.

4. Système d'affichage d'information suivant la revendication 3, dans lequel l'information d'image entrante contient des signaux d'image de télévision à analyse entrelacée, caractérisé en ce que chaque unité électronique d'affichage comprend un tube d'affichage, un élément d'affichage pour produire au moins un faisceau d'électrons, pour dévier le ou les faisceaux d'électrons et pour commander leur intensité instantanée et, pour chaque cadre d'une demi-image, un élément de mémoire, un élément de commande de mémoire et un ou trois éléments de conversion numérique/analogique, et en ce que chaque élément de commande de mémoire fournit un signal de suppression de retour de spot pour un ou, respectivement, trois éléments de conversion numérique/analogique.

5. Système d'affichage d'information suivant l'une quelconque des revendications précédentes, dans lequel chaque unité électronique d'affichage comprend un tube d'affichage, caractérisé en ce que, à l'avant de la plaque avant de chaque tube d'affichage du panneau de visualisation, il est prévu une lentille de Fresnel plane, de sorte que les images de tubes d'affichage voisins sont agrandies afin que l'image affichée par le panneau soit exempte de discontinuités.

6. Système d'affichage d'information suivant la revendication 5, caractérisé en ce que les lentilles de Fresnel comportent au moins 60 rainures par centimètre.

7. Système d'affichage d'information suivant là revendication 5 ou la revendication 6, caractérisé en ce que les lentilles de Fresnel sont disposées à l'avant des plaques avant des tubes d'affichage respectifs de façon à venir au moins en contact les unes avec les autres.

8. Système d'affichage d'information suivant l'une quelconque des revendications 1 à 4, dans lequel chaque unité d'affichage comprend un tube d'affichage, caractérisé en ce que, sur une face, la plaque avant est profilée en conformité avec l'écran du tube d'affichage et est plane sur l'autre face, et en ce que des fibres optiques sont prévues dans la plaque avant de manière à s'étendre de la face de la plaque avant adjacente à l'écran jusqu'à la face plane de la plaque avant, ces fibres optiques s'écartant en éventail du centre de l'écran vers la périphérie de l'écran en direction de la face plane de la plaque avant.

9. Système d'affichage d'information suivant l'une quelconque des revendications 1 à 4, dans lequel chaque unité d'affichage du panneau comprend un tube d'affichage, caractérisé en ce que, à la circonférence de la plaque avant de chaque tube d'affichage, des prismes sont disposés de façon à templir optiquement les intervalles sans image entre les plaques avant respectives des tubes d'affichage du panneau de visualisation.

10. Système d'affichage d'information suivant la revendication 9, caractérisé en ce que les prismes de tubes d'affichage voisins sont au moins sensiblement adjacents les uns aux autres.

11. Système d'affichage d'information suivant la revendication 9 ou la revendication 10, caractérisé en ce que chaque prisme est constitué par une pluralité de barres transparentes, séparées les unes des autres par une couche de matière réfléchissante, l'agencement des différentes barres étant tel qu'elles sont relativement décalées sur le côté du prisme opposé au côté qui touche le tube d'affichage.

12. Système d'affichage d'information suivant la revendication 9 ou la revendication 10, caractérisé en ce que chaque prisme est constitué par une pluralité de conducteurs de lumière coniques relativement adjacents.

13. Système d'affichage d'information suivant la revendication 12, caractérisé en ce que les conducteurs de lumière sont disposés de sorte que les prismes sont en contact, d'un côté, avec la plaque avant du tube d'affichage et sont alignés de l'autre côté, cette ligne étant dirigée à l'opposé de la courbure de la plaque avant du tube d'affichage.

14. Panneau de visualisation, prévu pour l'utilisation dans un système suivant l'une quelconque des revendications 5 à 13.

FIG. 1.

FIG. 2.

0 074 696

FIG. 3.

2

FIG. 3.

FIG. 4.

FIG. 5A.

FIG. 5B.

FIG. 5C.

4